# EUROPÄISCHE PATENTSCHRIFT

(11) **EP 2 370 282 B1**
(45) Veröffentlichungstag und Bekanntmachung des Hinweises auf die Patenterteilung: **10.12.2014**
(21) Anmeldenummer: 09776002.9
(22) Anmeldetag: 23.07.2009
(51) Int. Cl.: B60J 10/02, B60J 10/00

(54) **U-PROFILELEMENT ZUM VERBINDEN EINER FAHRZEUGSCHEIBE MIT EINEM WASSERKASTEN**
U-PROFILE ELEMENT FOR CONNECTING A VEHICLE WINDOW TO A WATER TANK
ÉLÉMENT PROFILÉ EN U DESTINÉ À RELIER UNE VITRE DE VÉHICULE À UN COLLECTEUR D'EAU

(30) Priorität: 09.12.2008 DE 202008016217 U
(43) Veröffentlichungstag der Anmeldung: 05.10.2011
(73) Patentinhaber: Elkamet Kunststofftechnik GmbH, 35216 Biedenkopf (DE)
(72) Erfinder: FLAMMER, Eberhard, 35216 Biedenkopf (DE); PLATT, Wolfgang, 35216 Biedenkopf (DE)
(74) Vertreter: DREISS Patentanwälte PartG mbB
(86) Internationale Anmeldenummer: PCT/DE2009/001028
(87) Internationale Veröffentlichungsnummer: WO 2010/066216

(56) Entgegenhaltungen:
- EP-A1- 1 571 069
- EP-A1- 1 724 141
- WO-A2-2006/002891
- DE-A1- 10 122 637
- DE-U1- 20 008 555
- FR-A1- 2 817 302

## Beschreibung

Die Erfindung betrifft ein Profilelement zum Verbinden einer Fahrzeugscheibe mit einem Wasserkasten, gemäß dem Oberbegriff von Anspruch 1.

Bei Fahrzeugen befindet sich unterhalb der Fahrzeugscheibe, beispielsweise der Windschutzscheibe, ein Wasserkasten, der von der Scheibe abfließendes Wasser auffängt und seitlich abführt. Zur Festlegung und Abdichtung des Wasserkastens an der Unterkante der Fahrzeugscheibe verwendet man beispielsweise einen extrudierten Profilkörper oder Profilstrang, der randseitig mit der Fahrzeugscheibe fest verbunden wird und der zur lösbaren Aufnahme des Wasserkastens eine Rastnut aufweist.

Damit im Übergangsbereich von der Scheibenfläche zum Profilkörper keine Stufe oder Kante entsteht, offenbart DE 200 08 555 U1 eine Abdichtungs-Anordnung für Fahrzeugscheiben mit einem im Querschnitt hakenförmigen Profilelement, das mit dem unteren Rand der Fahrzeugscheibe verklebt wird. Das Profilelement hat einen Federschenkel, der zusammen mit einer Keilrippe eine nach außen offene Rastausnehmung bildet.

Diese nimmt den Wasserkasten auf, der rückseitig mit einer einspringenden Rippe versehen ist. Auf der Keilrippe sitzt eine Dichtlippe, die zwischen der ScheibenUnterkante und dem oberen Rand der Wasserkasten-Abdeckung einpassbar ist und in montierter Position mit den Außenflächen des Wasserkastens und der Fahrzeugscheibe bündig abschließt. Unterhalb der Rastnut ist eine Pufferleiste aus einer weicheren Komponente vorgesehen, mit der sich die Abdichtungs-Anordnung an der Karosserie abstützen kann.

Die Abstützung des Profilelements gegenüber der Karosserie ist notwendig, weil beim Einrasten des Wasserkastens in das Profilelement senkrecht zur Scheibenfläche ein relativ hoher Widerstand überwunden werden muss. Dieser wiederum ist notwendig, damit der Wasserkasten stets sicher an dem Profilelement fixiert ist und sich nicht während der Fahrt oder aufgrund anderer mechanischer oder thermischer Belastungen versehentlich lösen kann. Allerdings ist es zu Wartungszwecken oft notwendig, dass der Wasserkasten von der Fahrzeugscheibe gelöst und wieder montiert wird, beispielsweise um einen Filter zu wechseln.

Beim Montieren des Wasserkastens treten jedoch stets relativ hohe Kräfte auf, die unmittelbar auf die Verklebung des Profilkörpers mit der Fahrzeugscheibe einwirken. Fehlt daher eine Abstützung des Profilkörpers gegenüber der Karosserie oder ist kein Karosseriebereich vorhanden, an dem sich der Profilkörper abstützen kann, besteht die Gefahr, dass sich das Profil durch die auftretenden Montagekräfte von der Fahrzeugscheibe ablöst.

Ein weiterer Nachteil der vorbekannten Profile besteht darin, dass die Abstützung auf der Karosserie zu störenden Geräuschen führen kann, insbesondere dann, wenn die weichelastischen Stützelemente auf Dauer ihre Elastizität verlieren.

Aus der WO 2006/002891 ist eine Randprofilleiste bekannt, die zwischen einer Fahrzeugscheibe und einer Wasserkasten-Abdeckung einsetzbar ist. Die Profilleiste weist eine Kunststoffnoppe auf, mittels welcher ein Rastelement einer Wasserkasten-Abdeckung lösbar zwischen einem Federschenkel und einem Hauptschenkel der Profilleiste fixierbar ist.

Aus der EP 1 571 069 A1 und aus der EP 1 724 141 A1 sind Anordnungen bekannt, bei welchen Windleitelemente in Form eines Windleitblechs bzw. eines Windlaufgrills an Abdichtelementen einer Windschutzscheibe gehalten werden. Die Abdichtelemente weisen eine Haltevorrichtung mit zwei Lippen zum Halten eines Einhakelements des Windleitelements auf.

Ziel der Erfindung ist es, die genannten und weitere Nachteile des Standes der Technik zu überwinden und ein Profilelement zum Verbinden einer Fahrzeugscheibe mit einem Wasserkasten zu schaffen, das mit einfachen Mitteln kostengünstig aufgebaut ist und eine ebenso einfache wie rasche Montage des Wasserkastens gewährleistet, ohne die Verbindung zwischen dem Profilelement und der Fahrzeugscheibe zu überlasten. Der an dem Profilelement montierte Wasserkasten soll dennoch dauerhaft fest fixiert sein und auch stärkeren Belastungen problemlos standhalten.

Hauptmerkmale der Erfindung sind im kennzeichnenden Teil von Anspruch 1 angegeben. Ausgestaltungen sind Gegenstand der Ansprüche 2 bis 14.

Erfindungsgemäß ist es möglich, den Wasserkasten rasch und bequem zu montieren, denn dessen Rippe lässt sich im Vergleich zu herkömmlichen Profilen mit deutlich geringerem Widerstand bzw. Kraftaufwand in die zugehörige Rastausnehmung einfügen. Auf das Profilelement und dessen Verklebung mit der Fahrzeugscheibe wirken daher deutlich geringere Kräfte ein, so dass sich das Profil nicht mehr ungewollt von der Scheibe lösen kann, selbst nach wiederholtem Aus- und Einbau des Wasserkastens. Auch eine aufwendige Abstützung des Profilelements gegenüber der Karosserie ist nicht mehr notwendig, was sich günstig auf die Herstell- und Montagekosten auswirkt. Mithin können keine störenden Geräusche mehr auftreten, wenn sich die Abstützung des Profilelements und die Karosserie relativ zueinander bewegen.

Beim Herausziehen der Rippe hingegen muss durch die erfindungsgemäße Ausbildung des Rastelements eine deutlich größere Kraft aufgewendet werden, so dass der Wasserkasten nach der Montage an dem Profilelement fixiert ist. Der Wasserkasten kann sich selbst bei stärkeren mechanischen oder thermischen Belastungen nicht vom Profilelement oder gar vom Fahrzeug lösen, was eine hohe Betriebssicherheit gewährleistet. Die gesamte Anordnung ist einfach aufgebaut und außerordentlich stabil.

Für die Dimensionierung der Ein- und Ausbaukräfte ist es günstig, wenn das bzw. jedes Rastelement in einem spitzen Winkel zur Fügerichtung angeordnet ist. Es kann beispielsweise beim Einführen der Rippe des Wasserkastens in die Rastausnehmung leicht zur Seite gedrückt bzw. gebogen werden, während beim Abnehmen des Wasserkastens die Rippe das Rastelement zunächst stauchen muss, bevor dieses die Rippe freigibt.

Durch die Winkelstellung des Rastelements gegenüber der Montagerichtung bildet das bzw. jedes Rastelement einen Widerhaken für die in die Rastausnehmung eingeführte Rippe des Wasserkastens, so dass dieser nur nach Überwinden des Widerhakens mit einer vorbestimmten Kraft von dem Profil gelöst werden kann, um beispielsweise darunter angeordnete Bauteile warten oder reparieren zu können.

Umgekehrt lässt sich der Widerstand des Widerhakens beim Einfuhren der Rippe in die Rastausnehmung relativ leicht überwinden, so dass das Profilelement und dessen Verbindung zur Fahrzeugscheibe kaum belastet werden.

Günstig ist ferner, wenn das bzw. jedes Rastelement zumindest teilweise ein elastisch verformbarer Körper ist. Dieser gibt beim Einführen der Rippe in die Rastausnehmung relativ leicht nach, während ein Ausweichen des Rastelements beim Herausziehen der Rippe aus dem Profilelement trotz der Elastizität deutlich erschwert ist, beispielsweise indem das Rastelement gestaucht werden muss, bevor es die Rippe freigibt. Um die Funktion des Widerhakens zu unterstützen, kann das bzw. jedes Rastelement an seiner freien Längskante mit einer Wölb- oder Nasenkante versehen sein, die sich - je nach Ausführungsform - an der Rippe des Wasserkastens und/oder an dem Profilelement abstützt.

Erfindungsgemäß ist vorgesehen, dass das bzw. jedes Rastelement innerhalb der Rastausnehmung angeordnet und kraft- und/oder formschlüssig mit der Rippe des Wasserkastens in Eingriff bringbar ist. Hierbei lassen sich verschiedenste Ausgestaltungen realisieren. So kann z.B. das Rastelement in einem Winkel zur Fügerichtung an einer Tragrippe oder einem Vorsprung des Profilelements und/oder an einem Federschenkel der Rastausnehmung angebracht sein.

Weitere Vorteile ergeben sich, wenn die Rastausnehmung eine Eingriffsöffnung hat oder bildet, wobei das bzw. jedes Rastelement zumindest abschnittsweise in die Eingriffsöffnung hineinragt. Dadurch gelangt die Rippe des Wasserkastens beim Einführen in die Rastausnehmung sofort mit dem Rastelement in Eingriff, wobei letzteres zunächst von der Rippe nach innen weggedrückt wird, so dass sich der Wasserkasten ohne großen Kraftaufwand leicht montieren lässt. Nach dem Einrasten der Rippe in der Rastausnehmung hingegen steht das Rastelement mit der Rippe in Eingriff. Es bildet zudem aufgrund seiner Winkelstellung einen Widerhaken und kann nur nach Überwinden einer größeren Kraft zur Seite gedrückt werden. Der Wasserkasten kann sich damit - trotz leichtgängiger Montage - nicht mehr unbeabsichtigt von dem Profilelement lösen.

Für zusätzliche Stabilität innerhalb des Profilelements sorgt die Ausgestaltung, wonach sich eine Wölb- bzw. Nasenkante des bzw. jedes Rastelements in montierter Stellung des Wasserkastens an dessen Rippe abstützt. Letztere kann hierzu mit einem Hinterschnitt, einer Stufe o.dgl. versehen sein.

Ergänzend oder alternativ kann das bzw. jedes Rastelement an der Rippe des Wasserkastens angeordnet sein, wobei dann das Rastelement kraft- und/oder formschlüssig mit dem Profilelement in Eingriff bringbar ist. Auch hierdurch ist eine ebenso einfache wie rasche Montage des Wasserkastens gewährleistet, ohne dass die Verbindung zwischen dem

Profilelement und der Fahrzeugscheibe während der Montage belastet wird. Gleichzeitig ist der an dem Profilelement montierte Wasserkasten derart fest fixiert, dass die gesamte Anordnung auch stärkeren Belastungen problemlos standhalten kann, aber dennoch eine Demontage des Wasserkastens ermöglicht, ohne das Profilelement zu beschädigen.

Das Rastelement wirkt in dieser Ausführungsform gegenüber dem Profilelement als Widerhaken, der die Fügekräfte deutlich reduziert, dennoch aber den montierten Wasserkasten fest fixiert. Die Wölb- oder Nasenkante des bzw. jedes Rastelements stützt sich dabei an der Tragrippe, dem Vorsprung oder dem Federschenkel ab, die hierzu einen Hinterschnitt, eine Stufe o.dgl. aufweisen können.

Die Rastausnehmung des Profilelements wird von einem Federschenkel und dem ersten Abschnitt gebildet, wobei das freie Ende des Federschenkels und der Vorsprung eine Eingriffsöffnung begrenzen. Dabei kann der Federschenkel im Wesentlichen L-, U- oder hakenförmig ausgebildet sein. Zusätzlich kann das freie Ende des Federschenkels innerhalb der Rastausnehmung mit einer Hinterschneidung versehen sein, in welche die Rippe des Wasserkastens oder das Rastelement eingreifen können.

Die Rippe des Wasserkastens wird mithin in verrasteter Position durch den nach außen vorspringenden Federschenkel stets fest umschlossen, während der Vorsprung für die Rippe einen Klemmkörper bildet. Eine zusätzliche oder ergänzende Rastfunktion kann durch eine Hinterschneidung an dem Vorsprung innerhalb der Rastausnehmung gebildet werden, beispielsweise für die Rippe des Wasserkastens oder das Rastelement.

Sämtliche Elemente können auch einstückig ausgebildet sein. Dadurch lassen sich die verschiedensten Ausgestaltungen realisieren, indem die einzelnen Elemente ein- oder mehrteilig ausgebildet werden.

Das Rastelement ist bevorzugt aus einem weichelastischen Material gefertigt, während andere Abschnitte des Profilelements und der Vorsprung aus einem härteren, aber dennoch elastischen Material bestehen. Die einzelnen Elemente oder das gesamte Profilelements können aber auch aus einer Materialkombination bestehen, namentlich in Form eines Verbundkörpers aus weichem und hartem Material. So kann beispielsweise die Dichtlippe außen weich und innen hart sein; sie kann speziell innen massiv oder hohl-hart und außen weich sein. Andere Varianten sind ebenfalls möglich.
Das Rastelement kann außen weich und innen aus einem härteren aber dennoch flexiblen Material bestehen. Ebenso kann es verschiedene Querschnittsformen haben, beispielsweise rechteckig, oval oder konkav. Es kann ferner eine individuelle, der Rippe des Wasserkastens angepasste Form aufweisen oder zumindest abschnittsweise als Hohlprofil ausgebildet sein. Der Vorsprung des Profilelements kann im Wesentlichen keilförmig, stufenförmig, T-förmig oder U-förmig ausgebildet sein. Weitere Formgestaltungen sind ebenfalls denkbar.

Der erste Abschnitt und/oder der zweite Abschnitt sind zumindest abschnittsweise mit einer elastischen Versterfungs-Einlage versehen. Das gesamte Profil wird dadurch hoch belastbar und dauerhaft stabil.

Fertigungstechnisch ist es günstig, wenn der erste Abschnitt und/oder der zweite Abschnitt als Strangpressprofil ausgebildet sind. Dies wirkt sich zudem günstig auf die Herstellkosten aus.

Bei einer vorteilhaften Ausgestaltung der Erfindung ist im Innenraum des ersten Abschnitts eine Dichtlippe vorgesehen. Diese Dichtlippe liegt nach Montage des Profilkörpers an der Fahrzeugscheibe an dieser an und wird vom ersten Abschnitt zumindest teilweise umschlossen. So wird gewährleistet, dass die Scheibe in dem Profilelement sicher gehalten wird und keine Feuchtigkeit eindringen kann.

Zudem kann eine weitere Dichtlippe am ersten Abschnitt des Profilelements angeordnet werden. Diese befindet sich dann zwischen Wasserkasten und Fahrzeugscheibe und verhindert, dass Feuchtigkeit in diesen Raum gelangen kann.

Die gesamte Abdichtungsanordnung ist für Fahrzeugscheiben vorgesehen, insbesondere für den unteren Bereich einer Kraftfahrzeug-Windschutzscheibe. Sie besteht aus der Fahrzeugscheibe, dem daran angebrachten Profilelement und dem darin festlegbaren Wasserkasten.

Das Profilelement ermöglicht eine rasche und einfache Montage des Wasserkastens ohne großen Kraftaufwand, so dass die Verbindung zwischen dem Profilelement und der Fahrzeugscheibe auch bei wiederholter Montage des Wasserkastens nicht belastet wird. Gleichzeitig wird der Wasserkasten in montierter Stellung kraft- und formschlüssig im Profilelement gehalten, so dass eine dauerhaft feste Verbindung entsteht, die auch stärkeren mechanischen und thermischen Belastungen dauerhaft standhält Dennoch lässt sich der Wasserkasten wieder abnehmen z.B. um einen Pollenfifter zu wechseln, wobei jedoch eine größere Kraft aufgewendet werden muss als bei der Montage.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer montierten Abdichtungs-Anordnung mit einem erfindungsgemäßen Profilelement mit Dichtlippen,
- Fig. 2: eine schematische Schnittansicht einer montierten Abdichtungs-Anordnung mit einem erfindungsgemäßen Profilelement ohne Dichtlippen und
- Fig. 3: eine schematische Schnittansicht der Abdichtungs-Anordnung von Fig. 1 vor der Montage des Wasserkastens und der Fahrzeugscheibe.

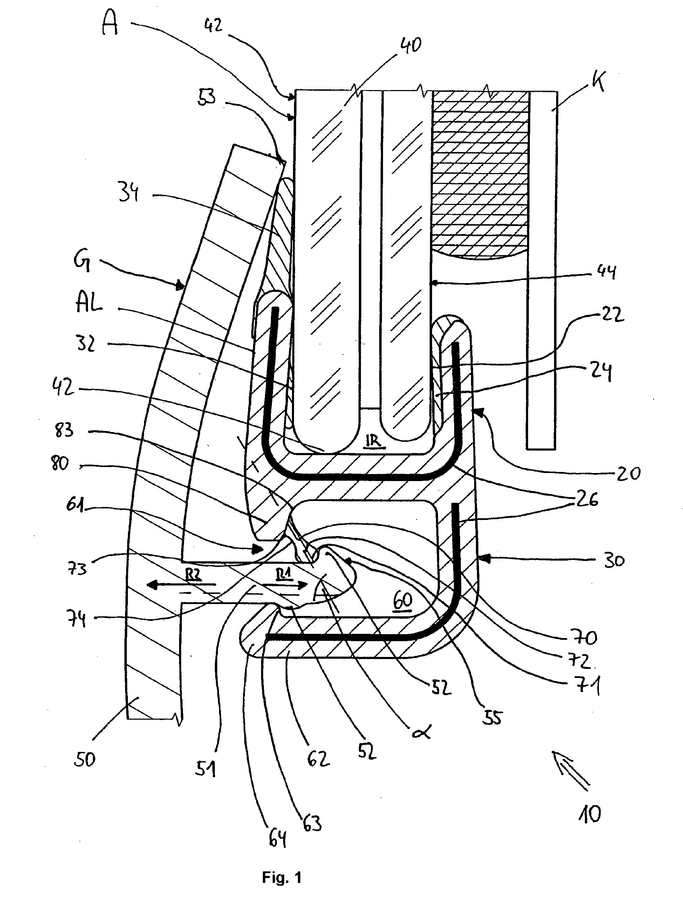

Das in Fig. 1 allgemein mit 10 bezeichnete Profilelement dient der Verbindung einer Fahrzeugscheibe 40 mit einem Wasserkasten 50. Die Fahrzeugscheibe 40 ist beispielsweise eine Windschutzscheibe aus Verbundglas, die in einer Karosserie K eines (nicht gezeigten) Pkws eingebaut wird. Der gewöhnlich aus einem Kunststoff gefertigte Wasserkasten 50 schließt mit einer Oberkante 53 an die Außenkante 42 der Windschutzscheibe 40 an und führt von dieser abfließendes Wasser nach außen ab.

Das Profilelement 10 ist bevorzugt ein Strangpressprofil, dessen Länge der Breite der Windschutzscheibe 40 bzw. der Breite des Wasserkastens entspricht. Es besteht aus einem oder mehreren Kunststoffen jeweils geeigneter Härte, beispielsweise Polypropylen (PP), Polyvinylchlorid (PVC), Acrylnitril-Butadien-Styrol-Copolymeren (ABS) o.dgl. und/oder aus Kombinationen davon. Verwendbar sind aber auch Elastomere bzw. Gummiwerkstoffe wie z.B. EPDM. Ein erster Abschnitt 20 des Profilelements 10 hat zur Festlegung an der Fahrzeugscheibe 40 eine Räche 22. Auf dieser ist eine Weichbeschichtung 24 angeordnet Diese Weichbeschichtung 24 kann an dem ersten Abschnitt 20 anvulkanisiert oder angeklebt sein. Das Profilelement 10 wird mit der Weichbeschichtung 24 entlang der Scheibenkante 42 auf der Rückseite 44 der Fahrzeugscheibe 40 angepresst. Die Weichbeschichtung 24 hat dabei einen höheren Reibungskoeffizienten als die übrigen Teile des Profilelements 10. Dadurch wird das Profilelement 10 sicher an der Fahrzeugscheibe 40 verklemmt. Gegebenenfalls kann es zusätzlich auch mit dieser verklebt werden.

Das Profilelement 10 hat ferner einen zweiten Abschnitt 30, der zur lösbaren Befestigung des Wasserkastens 50 eine Rastausnehmung 60 aufweist, wobei der Wasserkasten 50 rückseitig mit einer ein- bzw. vorspringenden Rippe 51 versehen ist, die kraft- und/oder formschlüssig in der Rastausnehmung 60 festlegbar ist. Man erkennt in Fig. 1, dass sich die Rippe 51 des Wasserkastens in einer Richtung R1 erstreckt, die etwa senkrecht zur Außenfläche G des Wasserkastens 50 bzw. zur Außenfläche A der Frontscheibe 40 verläuft Die Anordnung von Fahrzeugscheibe 40, Profilelement 10 und Wasserkasten 50 ist ferner so getroffen, dass die federelastische Rippe 51 des Wasserkastens 50 in Richtung R1 in die Rastausnehmung 60 des Profilelements 10 einführbar und in entgegengesetzter Richtung R2 wieder aus dem Profilelement 10 lösbar ist.

Die Rastausnehmung 60 wird von einem im Wesentlichen L-, U- oder hakenförmigen Federschenkel 62 sowie einem Vorsprung 80 begrenzt, der zwischen dem ersten Abschnitt 20 und dem zweiten Abschnitt 30 des Profilelements 10 ausgebildet ist. Das freie Ende 64 des Federschenkels 62 und der Vorsprung 80 bilden dabei eine Eingriffsöffnung 61 für die Rippe 51 des Wasserkastens 50.

Der Federschenkel 62 ist an seinem freien Ende 64 innerhalb der Rastausnehmung 60 mit einer Hinterschneidung 63 versehen. Diese hintergreift in montierter Stellung des Wasserkastens 50 eine an der Rippe 51 ausgebildete Nasenkante 52, so dass die Rippe 51 stets kraft- und oder formschlüssig in der Rastausnehmung 60 des Profilelements 10 fixiert ist. Um die Rippe 51 in die Rastausnehmung 60 besser einführen zu können, sind die Nasenkante 52 und das freie Ende 64 des Federschenkels 62 mit (nicht näher bezeichneten) Schrägflächen versehen.

Um eine ebenso einfache wie rasche Montage des Wasserkastens 50 gewährleisten zu können - ohne dabei die Klemmverbindung zwischen dem Profilelement 10 und der Fahrzeugscheibe 40 zu belasten - ist innerhalb der Rastausnehmung 60 ein Rastelement 70 in Form einer Rippe vorgesehen, die sich in Längsrichtung des Profils 10 erstreckt. Es handelt sich um einen zumindest teilweise elastisch verformbaren Körper, der aus einem weich-elastischen Material, beispielsweise einem thermoplastischem Elastomer (TPE, EPDM), einem Moosgummi oder einem anderen geeigneten Material, gefertigt und derart ausgebildet ist, dass das Einführen der Rippe 51 des Wasserkastens 50 in die Rastausnehmung 60 in Fügerichtung R1 mit relativ geringem Kraftaufwand möglich ist, während das Herausziehen der Rippe 51 aus der Rastausnehmung 60 in entgegengesetzter Richtung R2 deutlich erschwert wird.

Wie Fig. 1 zeigt, liegt das Rastelement 70 innerhalb der Rastausnehmung 60 in einem Winkel alpha zur Richtung R1, R2 und damit in einem spitzen Winkel zur Rippe 51 des Wasserkastens 50. Es ragt ferner zumindest abschnittsweise in die Eingriffsöffnung 61 der Rastausnehmung 60 hinein und ist innerhalb dieser kraft- und/oder formschlüssig mit der Rippe 51 des Wasserkastens 50 in Eingriff bringbar, so dass letzterer in montierter Stellung dauerhaft fest aber lösbar fixiert wird.

Um dies zu unterstützen ist das Rastelement 70 an seiner freien Längskante 72 mit einer Wölb- oder Nasenkante 71 versehen, während die Rippe 51 des Wasserkastens 50 mit einer zugeordneten Nasenkante 52 bzw. Hinterschneidung versehen ist. Dadurch kann sich das freie Ende des Rastelements 70 bzw. dessen Wölb- oder Nasenkante 71 in montierter Stellung des Wasserkastens 50 an dessen ebenfalls in Längsrichtung des Profilelements 10 erstreckenden Rippe 51 abstützen, so dass eine dauerhaft feste Verrastung gewährleistet ist.

Wie Fig. 1 weiter zeigt, ist das Rastelement 70 an dem Vorsprung 80 festgelegt und zwar im Bereich der Hinterschneidung 83. Es hat ferner zwischen dem Anbindungsbereich 73 an dem Vorsprung 80 und der endseitig ausgebildeten Wölb- oder Nasenkante 71 einen verjüngt ausgebildeten Abschnitt 74, so dass sich eine etwa konkave Querschnittsfläche ergibt. Diese ermöglicht es dem Rastelement 70 seitlich oder quer zu dessen Längsrichtung auszuweichen, sobald die Rippe 51 des Wasserkastens 50 in die Rastausnehmung 60 eingeführt wird. Um diesen Effekt zu unterstützen ist die Rippe 51 endseitig mit einer Schrägfläche oder -flanke 55 versehen, welche das Rastelement 70 zur Seite drücken kann. Je nach gewünschtem Kraftaufwand für das Einführen der Rippe 51 in die Rastausnehmung 60 kann das Rastelement 70 im Querschnitt auch keil- oder quaderförmig ausgebildet sein.

Das Rastelement 70 ist bevorzugt stoffschlüssig mit dem Vorsprung 80 verbunden. Es kann aber auch einstückig mit diesem ausgebildet sein. Weiterhin zeigt Fig. 1, dass zwischen der Außenseite A der Fahrzeugscheibe 40 und dem ersten Abschnitt 20 des Profilelements 10 eine Dichtung 32 vorgesehen ist. Die Dichtung 32 dichtet den Innenraum IR des Profilelements 10 gegen Feuchte ab und sorgt zudem für einen sicheren Halt des

Profilelements 10 an der Fahrzeugscheibe 40. Eine weitere Dichtung 34 ist an der dem Wasserkasten 50 zugewandeten Seite des ersten Abschnitts 20 des Profilkörpers 10 vorgesehen. Diese Dichtung 34 verhindert das Feuchtigkeit entlang der Außenseite A der Fahrzeugscheibe 40 in den Innenraum IR gelangt. Ferner gewährleistet sie, dass der Wasserkasten 50 nicht direkt auf der Fahrzeugscheibe 40 aufliegt. Durch Vibration entstehende Lärmbelästigungen werden so vermieden.

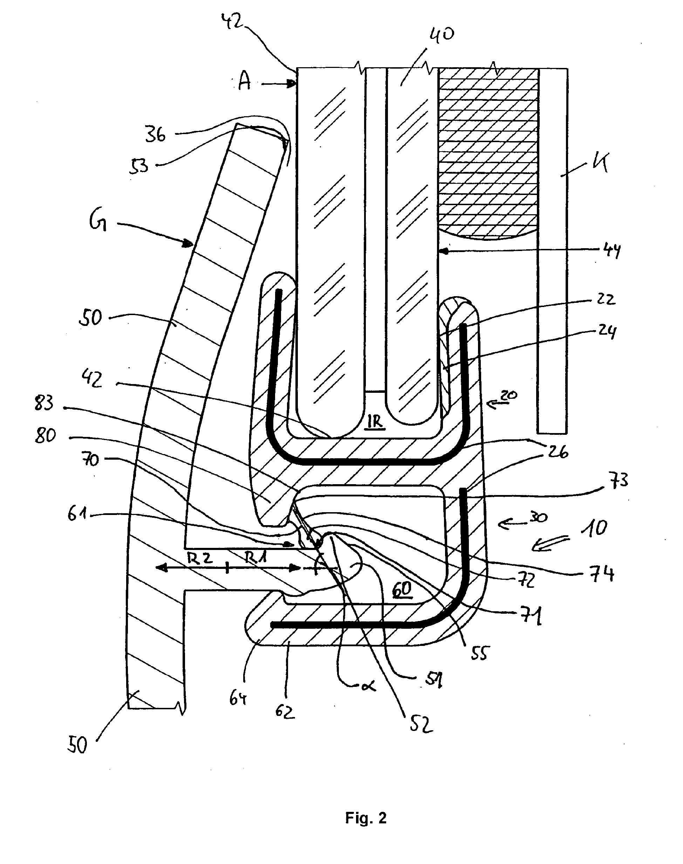

Fig. 2 zeigt eine erfindungsgemäße Abdichtungs-Anordnung bestehend aus Fahrzeugscheibe 40, daran befestigtem Profilelement 10 und Wasserkasten 50 in montiertem Zustand ohne die Dichtungen 32, 34. Man erkennt sofort den offenen Zwischenraum 36, der zwischen Fahrzeugscheibe 40 und Wasserkasten 50 verbleibt. Für manche Fahrzeugtypen ist diese Ausgestaltung aus wirtschaftlicher Sicht die optimale Ausgestaltung. Das Profilelement 10 kann auch alternativ an die Fahrzeugscheibe 40 angeklebt werden. Alternativ kann diese Ausführungsform auch für Wasserkästen verwendet werden, die ihrerseits bereits über eine eigene Dichtung 34 (in Form einer Gummilippe) verfügen. Die Rippe 51 des Wasserkastens 50 ist auch hier in der Rastausnehmung 60 des Profilelements 10 verrastet.

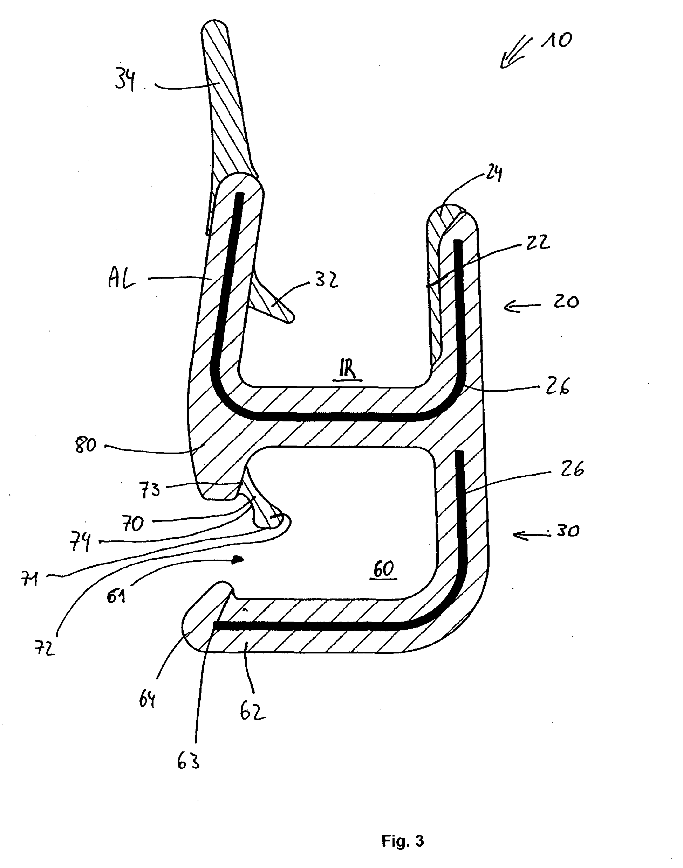

Fig. 3 veranschaulicht die Abdichtungs-Anordnung bestehend aus Fahrzeugscheibe 40, daran befestigtem Profilelement 10 und Wasserkasten 50 aus Fig. 1 in noch nicht montiertem Zustand. Man erkennt jedoch in Fig. 3, dass die im Innenraum IR liegende Dichtung 32 ohne montierte Fahrzeugscheibe 40 in diesen hineinragt. Beim Einführen der Fahrzeugscheibe 40 wird diese im ersten Abschnitt 20 zwischen Dichtung 32 und Weichbeschichtung 24 gehalten. Die Weichbeschichtung 24 kann dabei zusätzlich noch mit einem Kleber behandelt sein. Die außen liegende Dichtung 34 ist bevorzugt an den äußeren Flügel AL des Profilelements 10 anvulkanisiert, geklebt oder einstückig mit diesem hergestellt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| A | Außenfläche (von 40) | | |
| AL | äußerer Schenkel (von 10,20) | 50 | Wasserkasten |
| G | Außenfläche (von 50) | 51 | Rippe |
| R1 | Richtung | 52 | Nasenkante/Hinterschneidung |
| R2 | Richtung | 53 | Oberkante |
| K | Karosserie | 55 | Schrägfläche/-flanke |
| O | Winkel | | |
| | | 60 | Rastausnehmung |
| 10 | Profilelement | 61 | Öffnung |
| | | 62 | Federschenkel |
| 20 | erster Abschnitt | 63 | Hinterschneidung |
| 22 | Fläche | 64 | freies Ende |
| 24 | Weichbeschichtung | | |
| 26 | Versteifungs-Einlage | 70 | Rastelement |
| | | 71 | Nasenkante |
| 30 | zweiter Abschnitt | 72 | Längskante |
| 32 | Dichtung | 73 | Anbindungsbereich |
| 34 | Dichtung | 74 | Abschnitt |
| | | | |
| 40 | Fahrzeugscheibe | 80 | Vorsprung |
| 42 | Scheiben-Unterkante | 83 | Hinterschneidung |
| 44 | Rückseite | | |

## Patentansprüche

1. Profilelement (10) zum Verbinden einer Fahrzeugscheibe (40) mit einem Wasserkasten (50), mit einem ersten Abschnitt (20), der an der Fahrzeugscheibe festlegbar ist und mit einem zweiten Abschnitt (30), der zur lösbaren Befestigung des Wasserkastens (50) eine Rastausnehmung (60) hat oder bildet, wobei der Wasserkasten (50) eine Rippe (51) aufweist, die kraft- und/oder formschlüssig in der Rastausnehmung (60) festlegbar ist, wobei die Rastausnehmung (60) von einem Federschenkel (62) und dem ersten Abschnitt (20) gebildet ist, wobei das freie Ende (64) des Federschenkels (62) und der erste Abschnitt (20) eine Eingriffsöffnung (61) der Rastausnehmung (60) begrenzen, wobei wenigstens ein Rastelement (70) innerhalb der Rastausnehmung (60) angeordnet ist und kraft- und/oder formschlüssig mit der Rippe (51) des Wasserkastens (50) in Eingriff bringbar ist, **dadurch gekennzeichnet, dass** der erste Abschnitt (20) die Fahrzeugscheibe (40) randseitig zumindest teilweise umschließt, dass das wenigstens eine Rastelement (70) an einem zwischen dem ersten Abschnitt (20) und dem zweiten Abschnitt (30) ausgebildeten Vorsprung (80) festgelegt ist, und zwar im Bereich einer Hinterschneidung (83), und dass das wenigstens eine Rastelement (70) derart ausgebildet ist, dass das Einführen der Rippe (51) des Wasserkastens (50) in die Rastausnehmung (60) in einer ersten Richtung (R1) erleichtert, das Herausziehen der Rippe (51) aus der Rastausnehmung (60) in entgegengesetzter Richtung (R2) hingegen erschwert ist.

2. Profilelement nach Anspruch 1, **dadurch gekennzeichnet, dass** das wenigstens eine Rastelement (70) in einem spitzen Winkel (alpha) zur Richtung (R1, R2) angeordnet ist.

3. Profilelement nach Anspruch 1 oder 2, **dadurch gekennzeichnet, dass** das wenigstens eine Rastelement (70) einen Widerhaken bildet.

4. Profilelement nach einem der Ansprüche 1 bis 3, **dadurch gekennzeichnet, dass** das wenigstens eine Rastelement (70) zumindest teilweise ein elastisch verformbarer Körper ist.

5. Profilelement nach einem der Ansprüche 1 bis 4, **dadurch gekennzeichnet, dass** das wenigstens eine Rastelement (70) an seiner freien Längskante (72) mit einer Wölb- oder Nasenkante (71) versehen ist.

6. Profilelement nach Anspruch 5, **dadurch gekennzeichnet, dass** sich die Wölb- oder Nasenkante (71) des wenigstens einen Rastelements (70) in montierter Stellung des Wasserkastens (50) an dessen Rippe (51) abstützt.

7. Profilelement nach einem der Ansprüche 1 bis 6, **dadurch gekennzeichnet, dass** das wenigstens eine Rastelement (70) zumindest abschnittsweise in die Eingriffsöffnung (61) hineinragt.

8. Profilelement nach einem der Ansprüche 1 bis 7, **dadurch gekennzeichnet, dass** es so ausgebildet ist, dass es mit wenigstens einem an der Rippe (51) des Wasserkastens (50) angeordneten Rastelement (70) kraft- und/oder formschlüssig in Eingriff bringbar ist.

9. Profilelement nach Anspruch 8, **dadurch gekennzeichnet, dass** sich eine Wölb- oder Nasenkante (71) des wenigstens einen Rastelements (70) in montierter Stellung des Wasserkastens (50) an dem Profilelement (10) abstützt.

10. Profilelement nach einem der Ansprüche 1 bis 9, **dadurch gekennzeichnet, dass** der erste Abschnitt (20) und/oder der zweite Abschnitt (30) zumindest abschnittsweise mit einer Versteifungs-Einlage (26) versehen sind.

11. Profilelement nach einem der Ansprüche 1 bis 10, **dadurch gekennzeichnet, dass** der erste Abschnitt (20) und/oder der zweite Abschnitt (30) als Strangpressprofil ausgebildet sind.

12. Profilelement nach einem der Ansprüche 1 bis 11, **dadurch gekennzeichnet, dass** der erste Abschnitt (20) eine innen liegende Dichtlippe (32) aufweist.

13. Profilelement nach einem der Ansprüche 1 bis 12, **dadurch gekennzeichnet, dass** der erste Abschnitt (20) eine außen liegende Dichtlippe (34) aufweist.

14. Abdichtungsanordnung für den Übergang zwischen einer Fahrzeugscheibe (40) und einem Wasserkasten (50), insbesondere für den unteren Bereich einer Kraftfahrzeug-Windschutzscheibe, mit einem Profilelement (10) nach einem der Ansprüche 1 bis 13.

## Claims

1. Profile member (10) to connect a vehicle window (40) to a water gutter (50), having a first segment (20) affixable to the vehicle window and having a second segment (30) having or forming a detent cavity (60) to detachably affix the water gutter (50), the water gutter (50) having a rib (51) affixable in the detent cavity (60) by frictional and/or positive engagement, the detent cavity (60) being formed by a resilient limb (62) and the first segment (20), with the first segment (20) and the free end (64) of the resilient limb (62) defining an aperture for engagement (61) of the detent cavity (60), at least one detent element (70) being arranged within the detent cavity (60) and being able to be brought into frictional and/or positive engagement with the rib (51) of the water gutter (50), **characterised in that** the first segment (20) at least partly encloses by its edges the vehicle window (40), **in that** the at least one detent element (70) is affixed to a projection (80) formed between the first segment (20) and the second segment (30), being so affixed in the region of an undercut (83), and **in that** the at least one detent element (70) is so formed that the insertion of the rib (51) of the water gutter (50) into the detent cavity (60) in a first direction (R1) is facilitated, the extraction of the rib (51) from the detent cavity (60) in the opposite direction (R2) on the other hand being made difficult.

2. Profile member according to claim 1, **characterised in that** the at least one detent element (70) is arranged at an acute angle (alpha) to the direction (R1, R2).

3. Profile member according to claim 1 or 2, **characterised in that** the at least one detent element (70) forms a barb.

4. Profile member according to one of claims 1 to 3, **characterised in that** the at least one detent element (70) is at least in part an elastically deformable body.

5. Profile member according to one of claims 1 to 4, **characterised in that** the at least one detent element (70) is provided at its free longitudinal edge (72) with a curved or beaked edge (71).

6. Profile member according to claim 5, **characterised in that**, when the water gutter (50) is in an installed position, the curved or beaked edge (71) of the at least one detent element (70) is supported on its rib (51).

7. Profile member according to one of claims 1 to 6, **characterised in that** at least a portion or portions of the at least one detent element (70) project into the aperture for engagement (61).

8. Profile member according to one of claims 1 to 7, **characterised in that** it is so formed that it can be brought into frictional and/or positive engagement with at least one detent element (70) arranged on the rib (51) of the water gutter (50).

9. Profile member according to claim 8, **characterised in that**, when the water gutter (50) is in an installed position, a curved or beaked edge (71) of the at least one detent element (70) is supported on the profile member (10).

10. Profile member according to one of claims 1 to 9, **characterised in that** at least a portion or portions of the first segment (20) and/or the second segment (30) are provided with a stiffening insert (26).

11. Profile member according to one of claims 1 to 10, **characterised in that** the first segment (20) and/or the second segment (30) take the form of an extruded profile.

12. Profile member according to one of claims 1 to 11, **characterised in that** the first segment (20) has an internal sealing lip (32).

13. Profile member according to one of claims 1 to 12, **characterised in that** the first segment (20) has an external sealing lip (34).

14. Sealing system for the transition between a vehicle window (40) and a water gutter (50), particularly for the bottom region of a motor vehicle windscreen, having a profile member (10) according to one of claims 1 to 13.

## Revendications

1. Elément profilé (10) pour le raccordement d'un pare-brise de véhicule (40) avec un caisson d'eau (50), comprenant une première partie (20), qui peut être fixé au pare-brise du véhicule et une deuxième partie (30), qui présente, pour la fixation amovible du caisson à eau (50), un évidement d'encliquetage (60), le caisson à eau (50) présentant une nervure (51) pouvant être fixée en force et/ou par complémentarité de forme dans l'évidement d'encliquetage (60), l'évidement d'encliquetage (60) étant constitué d'une branche élastique (62) et de la première partie (20), l'extrémité libre (64) de la branche élastique (62) et la première partie (20) délimitant une ouverture d'emboîtement (61) de l'évidement d'encliquetage (60), au moins un élément d'encliquetage (70) étant disposé à l'intérieur de l'évidement d'encliquetage (60) et peut être emboîté en force et/ou par complémentarité de forme avec la nervure (51) du caisson à eau (50), **caractérisé en ce que** la première partie (20) entoure le pare-brise du véhicule (40) au moins partiellement sur le bord, **en ce que** l'au moins un élément d'encliquetage (70) est fixé à une saillie (80) formée entre la première partie (20) et la deuxième partie (30), au niveau d'une contre-dépouille (83), et **en ce que** l'au moins un élément d'encliquetage (70) est conçu de façon à ce que l'introduction de la nervure (51) du caisson à eau (50) dans l'évidement d'encliquetage (60) dans une première direction (R1) est facilitée et de façon à ce que l'extraction de la nervure (51) hors de l'évidement d'encliquetage (60) dans la direction opposée (R2) soit au contraire rendue plus difficile.

2. Elément profilé selon la revendication 1, **caractérisé en ce que** l'au moins un élément d'encliquetage (70) est disposé avec un angle aigu (alpha) par rapport à la direction (R1, R2).

3. Elément profilé selon les revendications 1 ou 2, **caractérisé en ce que** l'au moins un élément d'encliquetage (70) forme un contre-crochet.

4. Elément profilé selon l'une des revendications 1 à 3, **caractérisé en ce que** l'au moins un élément d'encliquetage (70) est au moins partiellement un corps déformable élastiquement.

5. Elément profilé selon l'une des revendications 1 à 4, **caractérisé en ce que** l'au moins un élément d'encliquetage (70) est muni, au niveau de son arête longitudinale libre (72), d'une arête bombée ou d'une arête d'embout (71).

6. Elément profilé selon la revendication 5, **caractérisé en ce que** l'arête bombée ou l'arête d'embout (71) de l'au moins un élément d'encliquetage (70) s'appuie, lorsque le caisson à eau (50) est monté, contre sa nervure (51).

7. Elément profilé selon l'une des revendications 1 à 6, **caractérisé en ce que** l'au moins un élément d'encliquetage (70) pénètre au moins partiellement dans l'ouverture d'emboîtement (61).

8. Elément profilé selon l'une des revendications 1 à 7, **caractérisé en ce qu'**il est conçu de façon à ce qu'il peut être emboîté en force et/ou par complémentarité de forme avec au moins un élément d'encliquetage (70) disposé sur la nervure (51) du caisson à eau (50).

9. Elément profilé selon la revendication 8, **caractérisé en ce qu'**une arête bombée ou une arête d'embout (71) de l'au moins un élément d'encliquetage (70) s'appuie contre l'élément profilé (10) lorsque le caisson à eau (50) est monté.

10. Elément profilé selon l'une des revendications 1 à 9, **caractérisé en ce que** la première partie (20) et/ou la deuxième partie (30) sont munies au moins partiellement d'un insert de rigidification (26).

11. Elément profilé selon l'une des revendications 1 à 10, **caractérisé en ce que** la première partie (20) et/ou la deuxième partie (30) sont conçues comme des profilés extrudés.

12. Elément profilé selon l'une des revendications 1 à 11, **caractérisé en ce que** la première partie (20) présente une lèvre d'étanchéité interne (32).

13. Elément profilé selon l'une des revendications 1 à 12, **caractérisé en ce que** la première partie (20) présente une lèvre d'étanchéité externe (34).

14. Dispositif d'étanchéité pour la transition entre un pare-brise de véhicule (40) et un caisson à eau (50), plus particulièrement pour la partie inférieure d'un pare-brise de véhicule automobile, avec un élément profilé (10) selon l'une des revendications 1 à 13.
